# EUROPEAN PATENT SPECIFICATION

(11) **EP 2 102 051 B1**
(45) Date of publication and mention of the grant of the patent: **30.11.2011**
(21) Application number: 08705297.3
(22) Date of filing: 10.01.2008
(51) Int. Cl.: F16D 65/28, B61H 13/20

(54) **A PARKING BRAKE ARRANGEMENT**
PARKBREMSENANORDNUNG
DISPOSITIF DE FREIN À MAIN

(30) Priority: 12.01.2007 SE 0700046
(43) Date of publication of application: 23.09.2009
(73) Proprietor: Faiveley Transport Nordic AB, 261 24 Landskrona (SE)
(72) Inventor: FRED EMILSSON, Fred, 231 95 Trelleborg (SE)
(74) Representative: Petri, Stellan
(86) International application number: PCT/SE2008/050024
(87) International publication number: WO 2008/085128

(56) References cited:
- EP-A1- 0 392 752
- EP-A1- 0 392 752
- WO-A1-2007/037750
- US-A- 4 467 704

## Description

### Technical Field

The present invention relates to a rail vehicle brake actuator having a parking brake arrangement, comprising a parking brake shaft rotatably journaled in the actuator and an arm arrangement connected to the shaft and having at its end an engagement member, which is intended for engagement with the upper side of a piston of the brake actuator.

### Background of the Invention

A rail vehicle brake actuator is commonly actuated at will for service braking by the admission of compressed air above a piston therein. The actuator is connected to further members of a brake rigging on the vehicle for application of the brakes of the vehicle, normally by applying a brake block against a wheel tread or brake pads against a brake disc.

A parking brake engagement can in such a case be accomplished by mechanically pushing the piston in a brake applying direction, for example by means described above.

A parking brake arrangement of this type may preferably be housed in a cover for the brake actuator with the arm arrangement generally transverse to the piston axis in a released condition. When the parking brake is applied by mechanically rotating the shaft of the parking brake arrangement, the application lever will decrease at increasing rotation of the shaft, which may give a non-desired parking brake application characteristic. Further, the maximum parking brake stroke, limited by the length of the arm arrangement, may be too short for certain uses.

The main object of the invention is to eliminate these two drawbacks with prior art solutions.

Document WO 2007/037750 A1 discloses a rail vehicle brake actuator according to the preamble of claim 1.

### The Invention

This is according to the invention attained in that the upper side of the piston is provided with means defining a cam curve in the form of a gradually elevating slope.

The engagement member is preferably a roller, but other designs are possible.

In a preferred embodiment, where the parking brake shaft - as said - is mounted in a cover of the brake actuator and is provided with a lever outside the cover for connection to a mechanical parking brake actuation means, such as a wire or rod, means in the form of a cooperating cover shoulder and arm shoulder are provided for limiting the rotation of the arm arrangement.

### Brief Description of the Drawings

The invention will be described in further detail below under reference to the accompanying drawings, in which
Fig 1 is a top view of a rail vehicle brake actuator with a parking brake arrangement according to the invention,
Fig 2 is a sectional view along the line II-II in Fig 1,
Fig 3 is a sectional view generally corresponding to Fig 2, but with the parking brake arrangement in a fully applied condition and with certain parts removed for clarity reasons, and
Fig 4 is a side view corresponding to Fig 3.

### Detailed Description of Embodiments

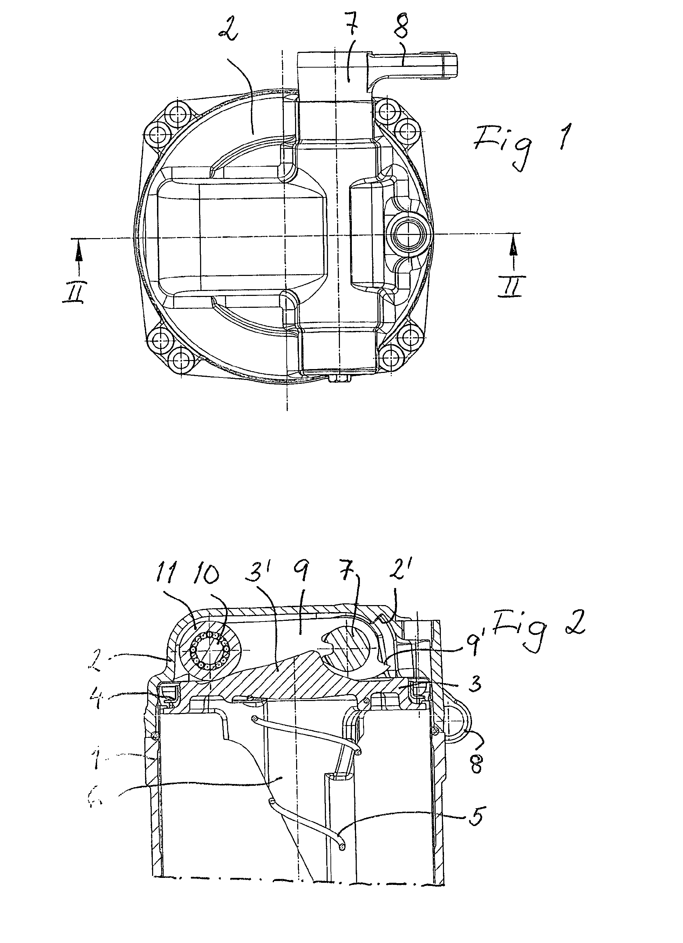

Reference is first made to Fig 2. Shown therein is a rail vehicle brake actuator, comprising a cylinder-shaped housing 1 with a cover 2. Axially movable therein is a piston 3 with a piston sealing 4 and a return spring 5 of compression-type. A piston rod 6 is shown as being wedge-shaped and is connected to further members (not shown) of a brake rigging on the rail vehicle. As is well known in the art, the arrangement is such that an application of braking means (brake blocks or brake pads) on wheels or brake discs of the vehicle is accomplished for service braking at a downward movement of the piston 3 in the housing 1 at the admission of compressed air above the piston 3.

In such an actuator, parking braking may be accomplished by moving the piston 3 down in the housing 1 by mechanical means. The invention relates to a parking brake arrangement of this kind.

A parking brake shaft 7 is journaled for rotation in the cover 2. Attached to the shaft 7 outside the cover 2 is a lever 8, to which a mechanical actuation means (not shown) may be connected. This mechanical actuation means may for example comprise a wire or rod, as is well known in the art.

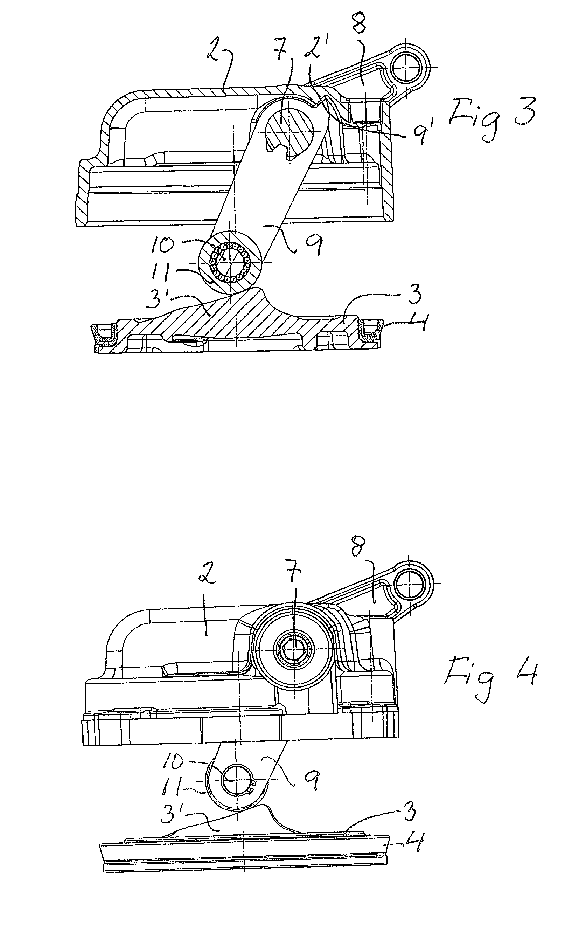

Inside the cover 2, a parking brake arm arrangement 9 is attached to the shaft 7. Preferably, the attachment is a spline connection, as is shown in Figs 2 and 3. The arm arrangement 9 may comprise two arms, between the ends of which an axle 10 with a rotatable actuation roller 11 is attached. This roller 11 may be defined as an engagement member, which may have another suitable design.

By turning the parking brake shaft 7 in the counter-clockwise direction by means of the lever 8 the parking brake arm arrangement 9 with the actuation roller 11 may be transferred from a rest position as shown in Fig 2 to an actuation position as shown in Figs 3 and 4, in which its roller 11 mechanically pushes the piston 3 down to obtain parking brake actuation.

On its upper side, with which the roller 11 may engage, the piston 3 is according to the invention provided with means defining a cam curve 3', i e an inclined or gradually elevating slope. The width of this means is less than the distance between the two arms of the arm arrangement 9, so that these arms may assume the rest position shown in Fig 2.

If the piston 3 would not be provided with such a cam curve 3' but would be substantially planar, as is the case in a conventional arrangement, the increase in piston stroke would gradually diminish at a counter-clockwise rotation of the parking brake shaft 7 due to the decreasing lever of the arm arrangement. Also, the mechanical push force on the piston 3 would increase progressively during application due to the decreasing application lever.

With the cam curve 3' on the other hand this drawback is eliminated, and the stroke characteristic of the piston 3 at actuation by the roller 11 may be adjusted to suit the demand. This means that the cam curve 3' in cross section may have a shape deviating from a simple line or curve. A further advantage is that the maximum stroke of the piston 3 may be enhanced (by the height of the cam curve).

As is shown in Fig 3, the counter-clockwise rotation of the parking brake shaft 7 may be limited by the engagement between a cover shoulder 2' and an arm shoulder 9'. By this measure the roller 11 will be prevented from sliding down the backside of the cam curve 3'.

The parking brake arrangement shown and described provides great versatility with regard to possible positions and external actuation directions, in that the cover 2 may be mounted in four different positions and that the lever 8 may have different directions.

## Claims

1. A rail vehicle brake actuator (1, 2) having a parking brake arrangement, comprising a parking brake shaft (7) rotatably journaled in the actuator and an arm arrangement (9) connected to the shaft and having at its end an engagement member (11), which is intended for engagement with the upper side of a piston (3) of the brake actuator, **characterized in that** the upper side of the piston (3) is provided with means defining a cam curve (3') in the form of a gradually elevating slope.

2. A brake actuator according to claim 1, wherein the engagement member is a roller (11).

3. A brake actuator according to claim 1, wherein the parking brake shaft (7) is mounted in a cover (2) of the brake actuator and is provided with a lever (8) outside the cover for connection to a mechanical parking brake actuating means, such as a wire or rod.

4. A brake actuator according to claim 1, wherein means in the form of a cooperating cove shoulder (2') and arm shoulder (9') are provided for limiting the rotation of the arm arrangement (9).

## Patentansprüche

1. Schienenfahrzeug-Bremsbetätigungszylinder (1, 2) mit einer Feststellbremsenanordnung, die eine Feststellbremsenwelle (7), welche drehbar in dem Betätigungszylinder gelagert ist, und eine Armanordnung (9) aufweist, die mit der Welle verbunden ist und an ihrem Ende ein Eingriffsglied (11) hat, das zum Eingriff mit der Oberseite eines Kolbens (3) des Bremsbetätigungszylinders vorgesehen ist, **dadurch gekennzeichnet, dass** die Oberseite des Kolbens (3) mit Mitteln versehen ist, die eine Nockenkurve (3') in Gestalt einer allmählich ansteigenden Auflauffläche bilden.

2. Bremsbetätigungszylinder nach Anspruch 1, bei dem das Eingriffsglied eine Rolle (11) ist.

3. Bremsbetätigungszylinder nach Anspruch 1, bei dem die Feststellbremsenwelle (7) in einem Deckel (2) des Bremsbetätigungszylinders montiert und mit einem Hebel (8) außerhalb des Deckels zur Verbindung mit einer mechanischen Feststellbremsenbestätigungseinrichtung, wie etwa ein Seil oder eine Stange, versehen ist.

4. Bremsbetätigungszylinder nach Anspruch 1, bei dem eine Einrichtung in Gestalt eines Höhlungsanschlags (2') und einer damit zusammenwirkenden Armschulter (9') zum Begrenzen der Drehung der Armanordnung (9) vorhanden ist.

## Revendications

1. Actionneur de frein de véhicule ferroviaire (1, 2) ayant un agencement de frein à main, comprenant un arbre de frein à main (7) tourillonné de manière rotative dans l'actionneur et un agencement de bras (9) raccordé à l'arbre et ayant au niveau de son extrémité, un élément de mise en prise (11) qui est prévu pour la mise en prise avec le côté supérieur d'un piston (3) de l'actionneur de frein, **caractérisé en ce que** le côté supérieur du piston (3) est prévu avec des moyens définissant une courbe de came (3') sous la forme d'une inclinaison progressivement ascendante.

2. Actionneur de frein selon la revendication 1, dans lequel l'élément de mise en prise est un rouleau (11).

3. Actionneur de frein selon la revendication 1, dans lequel l'arbre de frein à main (7) est monté dans un couvercle (2) de l'actionneur de frein et est prévu avec un levier (8) à l'extérieur du couvercle pour le raccordement à des moyens d'actionnement de frein à main mécanique, tel qu'un câble ou une tige.

4. Actionneur de frein selon la revendication 1, dans lequel des moyens se présentant sous la forme d'un épaulement à gorge (2') et d'un épaulement de bras (9') en coopération, sont prévus pour limiter la rotation de l'agencement de bras (9).
